Europäisches Patentamt

European Patent Office

Office européen des brevets

(11) Publication number: **0 430 448 A2**

# (12) EUROPEAN PATENT APPLICATION

(21) Application number: 90312000.4

(22) Date of filing: 01.11.90

(51) Int. Cl.5: **B29C 39/10, B29C 67/18**

(30) Priority: 02.11.89 GB 8924722

(43) Date of publication of application:
05.06.91 Bulletin 91/23

(84) Designated Contracting States:
DE FR GB IT NL Bulletin

(71) Applicant: Mosley, John Maurice Vincent
3, West Avenue, Daisy Lea Lane
Huddersfield, West Yorkshire(GB)

(72) Inventor: Mosley, John Maurice Vincent
3, West Avenue, Daisy Lea Lane
Huddersfield, West Yorkshire(GB)

(74) Representative: Pidgeon, Robert John et al
Appleyard Lees & Co. 15 Clare Road
Halifax West Yorkshire HX1 2HY(GB)

(54) Method of making a shaped product.

(57) A shaped product, for example a shower tray, has a surface skin (6) on a supporting substructure (8). The product is manufactured by forming a thin-walled shell of a plastics material, introducing a settable composition into the shell, to form the supporting substructure on setting, and, preferably, applying a tool to the composition so that the composition is located between the tool and the shell and maintaining the tool in position until the composition has set.

Fig.1

EP 0 430 448 A2

## METHOD OF MAKING A SHAPED PRODUCT

This invention relates to a method of making a shaped product having a surface skin on a supporting substructure.

In accordance with a first aspect of the present invention there is provided a method of forming a shaped product having a surface skin on a supporting substructure, comprising the steps of:

forming a thin-walled shell of a plastics material into the desired shape, the shell being able to retain a flowable composition; and

introducing a flowable, settable composition into the shell, the composition forming the supporting substructure on setting.

The shell may be a plastics moulding and a convenient method for manufacturing the shell is injection moulding or, especially, vacuum forming, in which a sheet of the plastics material is softened by heating and then drawn over a shaped male tool because of a relatively low pressure on that side of the sheet, compared with that on the other side. The plastics material is suitably a thermoplastics material, and may, for example, be of polystyrene, polyacrylic, polycarbonate, polyvinyl chloride or A.B.S. (Acrylonitrile-Butadiene-Styrene) plastics material; or of a plastics material which comprises more than one of these components, or of other components. It may be pigmented as required. A preferred plastics material is A.B.S. or A.B.S.-capped acrylic sheet, in which there are co-extruded layers of (thicker) A.B.S. and (thinner) polyacrylic material. In vacuum forming, the moulding temperature is generally in the range 120-200°C, depending upon the material.

The wall thickness of the shell may suitably be in the range of about 1 to about 5mm, suitably about 2 to about 3mm.

The flowable, settable composition mad suitably comprise a filler material and a plastics binder material. The filler material may suitably be an inorganic material, for example gravel, chippings, sand or shale. It may suitably be of limestone, chalk, alumina, silica, magnesia or other inorganic material. It may suitably comprise hollow particles of an inorganic material, for example glass microspheres, for example as produced by the 3M Company, and disclosed in Research Disclosure No. 253015. The plastics binder may be any settable plastics composition, whether setting under the action of a catalyst, or otherwise. Most suitably, the plastics binder selected is one which sets under the action of a catalyst. A suitable plastics binder is a polyester resin of the saturated or unsaturated type, or a styrene based resin. The proportion of filler to resin may vary widely. For example, it may be from about 80/20 by weight, to about 50/50. A preferred proportion is in the range, from about 60/40 to about 75/25, most preferably in the range, from about 65/35 to about 70/30.

In the method of the invention, shell is suitably placed in a female support tool which matches its shape, so that any tendency of the shell to distort on introduction of the flowable, settable composition and of the tool which is applied to the composition, is obviated. However, there may be instances where the shell does not require to be placed in such a tool, because of the thickness of the wall of the shell, or of its inherent rigidity, or of the relatively small quantity of settable composition introduced or of the relatively low force applied by the tool to the composition.

Suitably, the method may involve applying a tool to the composition so that the composition is located between the tool and the shell, whilst the composition is still flowable, and maintaining the tool in that position at least until the composition has set sufficiently to be substantially stable against flow under its own weight; and removing the tool.

If a tool as described in the previous paragraph is not employed, the flowable, settable composition is preferably introduced in sufficient quantity to substantially fill the shell. In this event the composition is desirably lightweight, for example a plastics binder/hollow microbead composition.

Suitably, a tool which is applied to the composition so that the composition is located between the tool and the shell, is of shape which generally matches the shape of the shell. Suitably such a tool is shaped and sized, and so located, that the composition located between the tool and the shell is of substantially constant thickness, suitably between about 12mm and about 20mm.

The invention is of particular interest in relation to the manufacture of certain sanitary fittings, for example shower trays. Certain such fittings are presently manufactured by spraying a pigmented gel coating composition into a female mould, permitting it to set, and then introducing a flowable, settable composition into the mould. However, such products are not satisfactory. The surface finish is neither good nor durable. In contrast, products manufactured in accordance with the method of the present invention have a surface skin defined by the shell, which, although thin-walled, is of much greater thickness than the pigmented coating in known products.

In accordance with a further aspect of the present invention there is provided a product formed by' the method described herein.

The product may be a sanitary fitting. It may be a shower tray having a base wall with an upstand around its periphery. The under-surface of the base wall is the under-surface of the supporting substructure and rests on the floor in use. When a said tool is employed in a preferred method as described herein, the upstand of such a shower tray is suitably not solid, and the under-surface of the supporting substructure preferably follows the contour of the shell in this region, the thickness of the supporting substructure in this region being approximately the same as the thickness in the region of the base wall.

The invention will now be further described, by way of example, with reference to the accompanying drawings in which:

Fig. 1, relating to a first embodiment, is a cross-section through a edge portion of a shower tray, including a hollow upstand 2 around the periphery of the shower tray, and a part of the base wall 4; and

Fig. 2, relating to a second embodiment, is a similar cross-section through a solid upstand.

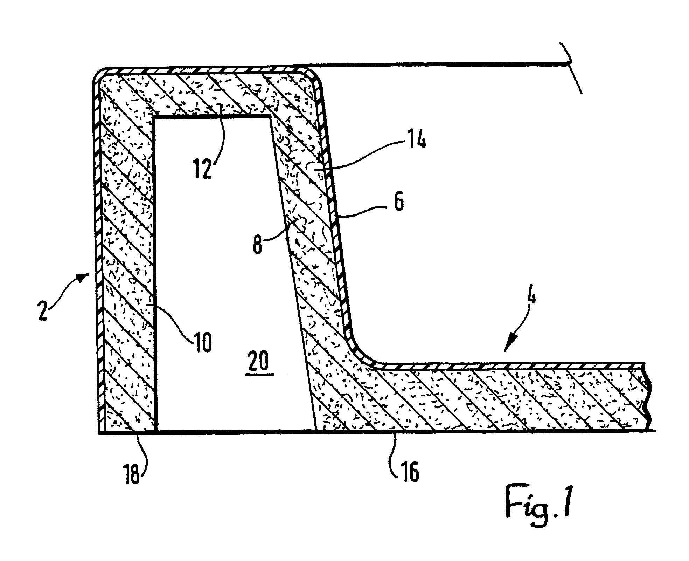

With reference to Fig. 1, the shower tray comprises a relatively thin-walled surface skin 6 of a pigmented ABS (polystyrene)\capped acrylic sheet material. Its thickness is about 3mm. Bonded to the under-surface of the skin 6 is a relatively thick supporting substructure 8 which is a mixture of calcium carbonate (chalk/limestone) filler in a catalyst- set polyester resin binder. The catalyst is methyl ethyl ketone. The proportion of filler to resin binder is about 70/30 by weight. The thickness of the substructure 8 is approximately 16mm.

The upstand 2 comprises an outer vertical wall 10 from the top of which extends inwardly a horizontal wall 12. From the inward end of the horizontal wall 12 extends downwardly an upright wall 14 which is at an obtuse angle to the horizontal wall 12, being a few degrees slant to the vertical. From the lower end of the wall 14 extends the horizontal base wall 4. The under- surface 16 of the base wall 4 is in the same plane as the lower end 18 of the outer vertical wall 2 and they both lie on a floor in use. It will be observed that within the upstand 2 there is a cavity 20 of complimentary shape to the external surface of the upstand, as defined by the skin.

To manufacture the shower tray, a flat sheet of a plastics material which is to form the skin is vacuum formed into a shell of the required shape over a male mould tool, at a temperature about 165-175°C. The shell which is formed is removed from the mould tool and placed upside down in a female tool whose shape it exactly matches, so that the shell is supported for the next step. A slurry of the binder/filler/catalyst material which is to form the supporting substructure is then poured into the shell. A male tool of shape generally corresponding to the shape of the shell, but somewhat smaller than the shell, is pressed onto the slurry so that the slurry is sandwiched between the male tool and the shell. The male tool is maintained in place until the slurry has set, and is then removed.

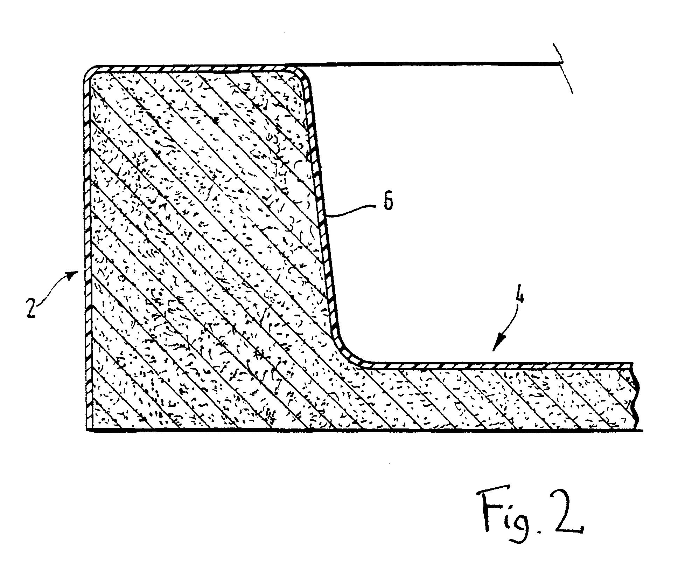

With reference to the further embodiment of Fig. 2, in which parts have the same reference numerals as corresponding parts in Fig. 1: a sheet is vacuum formed into a shell, to form the surface skin, as described above. The shell is then placed, upside down, in a female tool. A slurry of binder/filler/catalyst is then poured in, to substantially fill the shell. The binder and catalyst is as described above. The filler, however, is a lightweight blownglass material.

The reader's attention is directed to all papers and documents which are filed concurrently with this specification, and which are open to public inspection with this specification and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in the specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of forming a shaped product having a surface skin on a supporting substructure, comprising the steps of:

forming a thin-walled shell of a plastics material into the desired shape, the shell being able to retain a flowable composition; and

introducing a flowable, settable composition into the shell, the composition forming the supporting substructure on setting.

2. A method as claimed in Claim 1, comprising the steps of :

applying a tool to the composition so that the composition is located between the tool and the shell, whilst the composition is still flowable, and maintaining the tool in that position at least until the composition has set sufficiently to be substantially stable against flow under its own weight;

and removing the tool.

3. A method as claimed in Claim 2, wherein the tool is shaped and sized, and so located, that the composition located between the tool and the shell is of substantially constant thickness.

4. A method as claimed in any preceding claim, wherein the shell is a moulding of a thermoplastics material.

5. A method as claimed in Claim 4 wherein the shell is vacuum formed.

6. A method as claimed in any preceding claim, wherein the flowable, settable composition comprises a filler material and a plastics binder material.

7. A method as claimed in Claim 6, wherein the filler material is an inorganic material optionally comprising hollow microbeads.

8. A method as claimed in Claim 6 or 7, wherein the proportion of filler to resin is from about 80/20 to about 50/50 by weight.

9. A method as claimed in any preceding claim, wherein the shell is placed in a female support tool which matches its shape, so that any tendency of the shell to distort on introduction of the flowable, settable composition and of the tool which is applied to the composition, is substantially obviated.

10. A method as claimed in any preceding claim, wherein the shaped article is a shower tray.

Fig.1

Fig. 2